Europäisches Patentamt

European Patent Office

Office européen des brevets

(11) Publication number: **0 401 381**
**A1**

## (12) EUROPEAN PATENT APPLICATION
published in accordance with Art. 158(3) EPC

(21) Application number: 90900322.0

(22) Date of filing: 08.12.89

(86) International application number:
PCT/JP89/01236

(87) International publication number:
WO 90/06837 (28.06.90 90/15)

(51) Int. Cl.5: **B25J 19/06, G05B 19/405**

(30) Priority: 22.12.88 JP 322172/88

(43) Date of publication of application:
**12.12.90 Bulletin 90/50**

(84) Designated Contracting States:
**DE FR GB**

(71) Applicant: **FANUC LTD**
**3580, Shibokusa Aza-Komanba Oshinomura**
**Minamitsuru-gun Yamanashi 401-05(JP)**

(72) Inventor: **MIZUNO, Toru Room 901**
**Seisekisakuragaokapakuhomuzu 294-1,**
**Ichinomiya**
**Tama-shi Tokyo 206(JP)**
Inventor: **HARA, Ryuichi Room 7-206 Fanuc**
**Manshonharimomi**
**3539-1, Shibokusa Oshino-mura,**
**Minamitsuru-gun**
**Yamanashi 401-05(JP)**
Inventor: **KOSAKA, Tetsuya Fanuc Dai-3**
**Vira-karamatsu**
**3527-1, Shibokusa Oshino-mura**
**Minamitsuru-gun Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

## (54) OVER-RIDE DATA NOTIFYING DEVICE.

(57) An over-ride data notifying device with which an operator is allowed to correctly confirm a preset over-ride value. The notifying device has a teach board (20) in which a processor (21) reads a buzzer drive period corresponding to the preset over-ride value from a look-up table in a read-only memory (22) according to the preset over-ride value that is produced from a robot controller (10) and that is renewably stored in a memory (23). The processor then sets the initial value calculated based on the above period to a counter, inverts the level of a binary output of a 1-bit latch circuit (26) every time when the counter value that is periodically decreased reaches "0", intermittently energizes the buzzer (30) at a period corresponding to the preset over-ride value to notify the operator of preset over-ride value.

## FIG.I

- 1 -

# S P E C I F I C A T I O N
## OVERRIDE INFORMATION NOTIFYING APPARATUS
### Technical Field

The present invention relates to an override information notifying apparatus which permits an operator securely to recognize a set override value.

### Background Art

Conventionally known is a machine which has an override function such that the operating speed of an operating section assigned by a program is modified by an operator's operation. For example, a robot having the override function is designed so that a robot operating section can be automatically operated at a program-assigned operating speed, and can be also manually operated at a speed equivalent to the product of the program-assigned operating speed and an override value set at a suitable value less than 100% by the operator's operation of an override switch, at the time of manual robot operation including giving an instruction to the robot. Thus, the manual operation work can be safely performed at low speed.

As regards the robot of this type, moreover, it is known that a set override value is displayed on a CRT screen of a robot control unit or on a display panel disposed in the vicinity of the override switch. Since the operator performs various manipulations during the manual operation, however, he sometimes may fail to identify the set override value. If the set override value is too large, in this case, the manual operation is started without modifying it into a proper value, and the excessiveness of the set override value cannot be noticed until the manual operation is started. In such a case, the robot operating section operates at too high a speed, involving danger.

- 2 -

## Disclosure of the Invention

The object of the present invention is to provide an override information notifying apparatus which permits an operator securely to recognize a set override value.

In order to achieve the above object, an override information notifying apparatus according to the present invention is mounted on a machine having an operating section which is operable at an operating speed determined in dependence on a set override value, and comprises means for generating intermittent signals with a variable generation period, and means for determining the generation period of the intermittent signals in accordance with the set override value.

In the override information notifying apparatus of the present invention, as described above, the intermittent signals are generated with the period varying depending on the set override value, so that the operator can securely recognize the set override value, thereby rationalizing the set override value. In consequence, the operating section of the machine can be prevented from operating at an excessive speed, so that the safety of the operation can be ensured.

## Brief Description of the Drawings

Fig. 1 is a block diagram showing a robot furnished with an override information notifying apparatus according to one embodiment of the present invention;

Fig. 2 is a diagram showing a lookup table for determining buzzer sounding period stored in a memory of a teaching pendant;

Fig. 3 is a flowchart illustrating a buzzer sounding period determining process executed by a processor accommodated in the teaching pendant of

- 3 -

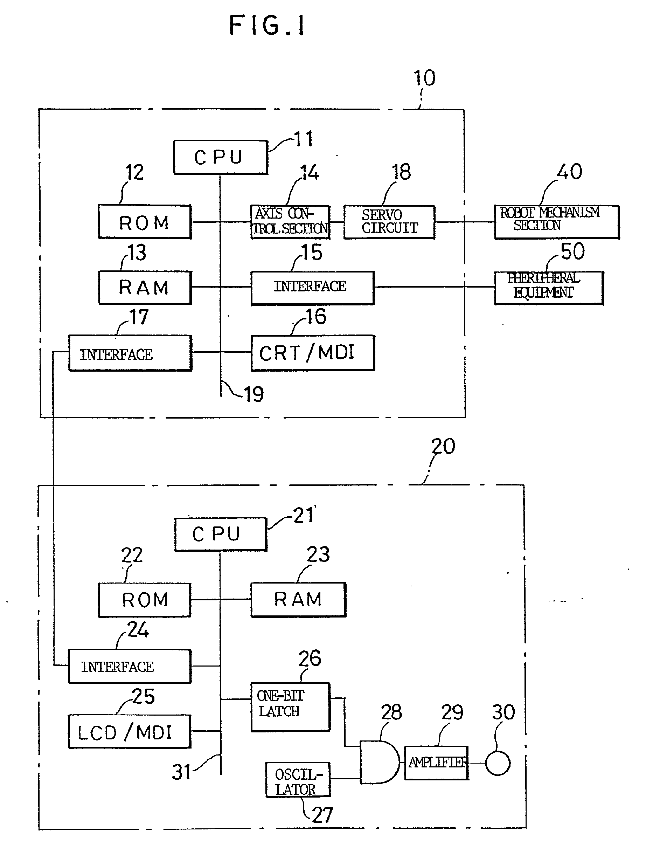

Fig. 1; and

Fig. 4 is a diagram illustrating intermittent sounding operation of a buzzer.

Best Mode of Carrying Out the Invention

Referring to Fig. 1, a robot furnished with an override information notifying apparatus according to one embodiment of the present invention comprises a robot control unit 10 and a teaching pendant 20, and a robot mechanism section 40 and peripheral equipment 50 are connected to the control unit 10.

The control unit 10 comprises a processor (hereinafter referred to as CPU) 11, a read-only memory (ROM) 12 stored with a control program, a random access memory (RAM) 13 for storing a robot operation program and various data including a set override value, and an axis control section 14. The CPU 11, in conjunction with the axis control section 14, performs pulse distribution to a servo circuit 18 so that servomotors (not shown) for various axes of the robot mechanism section are driven through the servo circuit 18. The control unit 10 further comprises first and second interfaces 15 and 17 and a manual data input device with CRT display (hereinafter referred to as CRT/MDI) 16, and the peripheral equipment 50 and the teaching pendant 20 are connected to the interfaces 15 and 17, respectively. These elements 12 to 17 are connected to the CPU 11 by means of busses 19.

The teaching pendant 20 comprises a CPU 21, a ROM 22 stored with a program for teaching pendant control, and a RAM 23 for temporarily storing data, including the set override value, and arithmetic results. The teaching pendant 20 further comprises an interface 24 connected to the second interface 17 of the control unit 10, a manual data input device with liquid crystal

- 4 -

display panel (hereinafter referred to as LCD/MDI) 25, and a one-bit latch circuit (output port) 26, and these elements 22 to 26 are connected to the CPU 21 by means of busses 31.  The LCD/MDI 25 is provided with an operation key arranged to be operable by an operator for increasing or decreasing the set override value.

The output terminal of the one-bit latch circuit 26 is connected to one input terminal of an AND gate 28 having another input terminal connected to an oscillator 27, and the output terminal of the AND gate 28 is connected to intermittent signal generating means (buzzer in the present embodiment) 30, formed of a buzzer or a lamp, through an amplifier 29.  The CPU 21 contains a counter (mentioned later) used for buzzer sounding control.  The CPU 21 is arranged to reverse the level of binary information stored in the one-bit latch circuit 26 and that of binary information stored in a predetermined region in the RAM 23 and used as an image value corresponding to the binary information in the latch circuit, and to set an initial value in the counter each time the value in the counter is reduced to "0".  Thus, when a binary output from the one-bit latch circuit 26 is at the high level "1," the buzzer 30 sounds in response to the output of the oscillator 27, and when the output level is the low level "0," the sounding is stopped.

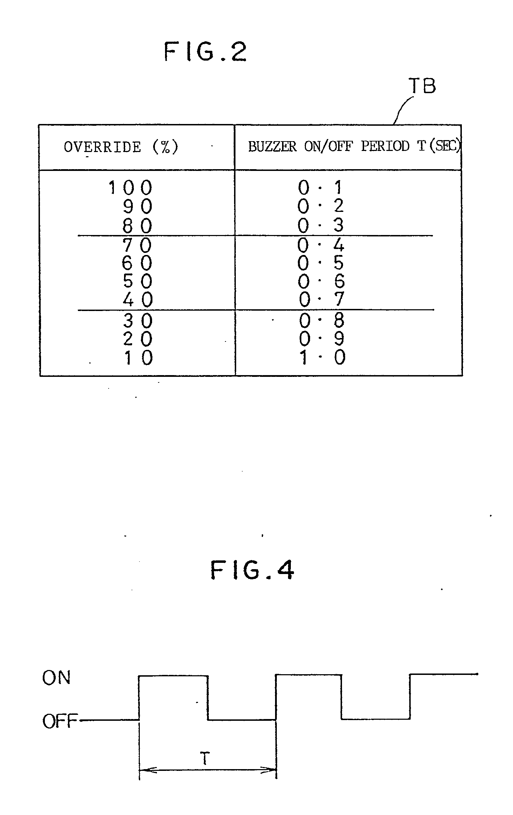

Further, the ROM 22 in the teaching pendant 20 is stored with a lookup table TB (Fig. 2) which indicates the correlation between the override value and the sounding period of the buzzer 30.

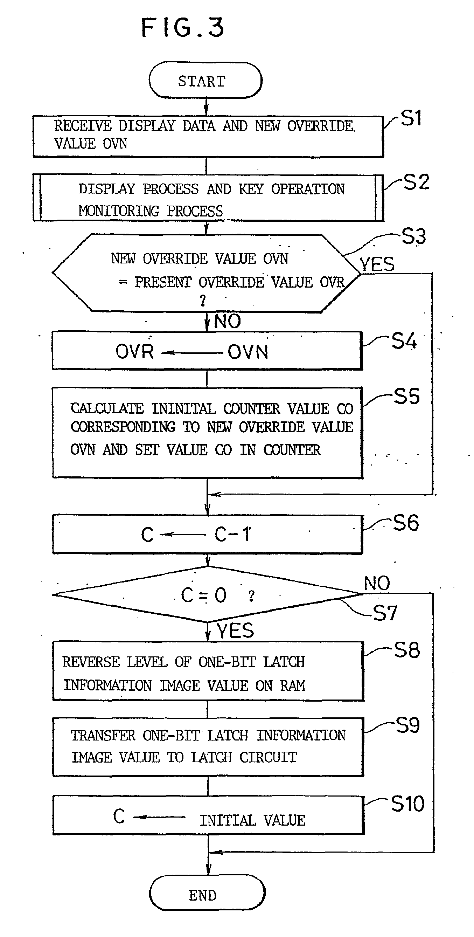

Referring now to Figs. 3 and 4, the operation of the robot with the aforementioned construction will be described.

At the start or after the changeover from

- 5 -

automatic operation of the robot to manual operation, the CPU 21 of the teaching pendant 20 executes a buzzer sounding period determining process of Fig. 3 at intervals of a predetermined period T0 (msec), e.g., 8 msec.

More specifically, on receiving, through the interface 24, the present set override value and display data delivered individually from the RAM 13 to the teaching pendant 20 under the control of the control unit 10 (Step S1), the CPU 21 executes a process including indication of received data on the liquid crystal display panel of the LCD/MDI 25 (Step S2). In Step S2, in association with the present invention, the CPU 21 monitors as to whether the operation key of the LCD/MDI 25 is operated by an operator, and transmits the result of the monitoring to the control unit 10. In response to this, the CPU 11 on the side of the control unit 10 updates the set override value stored in the RAM 13, if necessary.

Subsequently, the CPU 21 compares a new set override value OVN generated by the key operation and a set override value OVR currently stored in the RAM 23, thereby determining whether the override value is modified (Step S3). If there is no modification, the program proceeds to Step S6 mentioned later. In general, the set override value is modified before the manual operation, and in this case, the CPU 21 updates the set override value OVR in the RAM 23 to the new value OVN (Step S4). Then, the CPU 21 reads out a sounding period T (msec) of the buzzer 30 corresponding to the new set override value OVN from the lookup table TB, and calculates an initial value C0 to be set in the counter for sounding control in accordance with the following equation (1), which represents the sounding

- 6 -

period T as a function of the predetermined period T0 and the initial value C0 (Step S5).

$$T = 2 \times T0 \times (C0 - 1) \qquad\qquad --- (1)$$

If the new set override value OVN is 70%, for example, the initial counter value C0 (= 26) is calculated on the basis of the sounding period of 0.4 sec corresponding to this value. If the calculated value includes a fraction, the initial counter value C0 is generally obtained by counting the fraction of .5 and over as a unit and cutting away the rest.

Then, the CPU 21 decrements "1" from the counter value C (initial counter value C0 in this case) in the buzzer sounding period determining process for the present period (Step S6), and determines whether the counter value obtained after the decrementing is equal to "0" (Step S7). If the counter value is not "0," the process for the present period ends. In this case, the individual pieces of binary information in the RAM 23 and the one-bit latch circuit 26 are constant, so that the present state of the buzzer 30, sounding or non-sounding, can be maintained. Thus, if the AND gate 28 is enabled when the binary output of the one-bit latch circuit 26 is at the high level "1," the buzzer 30 sounds in response to the output of the oscillator 27 supplied through the AND gate 28 and the amplifier 29. If the AND gate 28 is disabled when the binary output of the latch circuit 26 is at the low level "0," on the other hand, the oscillator output is cut off, so that the buzzer 30 does not sound.

Thereafter, the process of Fig. 3 is repeatedly executed. If it is concluded in Step S3 that the set override value is not modified, in the meantime, the program immediately proceeds from Step S3 to Step S6. If it is concluded in Step S7 that the counter value C is equal to "0," the CPU 21 reverses the binary information (image value of the binary information in the one-bit latch circuit 26) in the RAM 23 (Step S8), and then transfers the binary information in the RAM 23 after the level reversal to the one-bit latch circuit 26 (Step S9). As a result, the buzzer 30 is changed from the sounding state to the non-sounding state or reversely. Further, the CPU 21 sets the initial counter value C0 in the counter (Step S10), whereupon the process of Fig. 3 for the present period is finished.

In this manner, the buzzer 30 sounds during the time the counter value C is reduced from the initial value C0, corresponding to the set override value, to the value "0". In the aforementioned case where the override value and the initial counter value C0 are set to 70% and 26, respectively, the buzzer 30 sounds during a period of 200 msec, which is equivalent to the product of a value obtained by subtracting the value "1" from the initial counter value C0 (= 26) and the predetermined period T0 (= 8 msec). Thereafter, the non-sounding state is maintained until the counter value, set to the initial value C0 again when sounding is stopped, is reduced to the value "0", e.g., during the period of 200 msec. In consequence, whether or not the set override value is modified by the operator in starting the manual operation or during the manual operation, the buzzer 30 intermittently sounds with the period T which corresponds to the set override value (Fig. 4). If the override value and the initial counter value C0 are 70% and 26, respectively, for example, the buzzer 30 intermittently sounds with a period of 400 msec. If the override value and the initial counter value C0 are 20% and 57, respectively, moreover, the buzzer 30 intermittently sounds with a period of 900 msec.

Thus, even when the operator fails to identify the set override value displayed on the liquid crystal display panel in the manual operation, he can previously know the set override value and the operating speed of a robot operating section corresponding thereto by hearing a buzzer sound produced before the manual operation is actually started. If it is concluded that the set override value is too large, the set override value displayed on the liquid crystal display panel is modified as required while identifying this set override value, and the manual operation of the robot is started thereafter.

The present invention is not limited to the embodiment described above, and various changes may be effected therein.

In the above embodiment, for example, the intermittent signal generating means is formed of the buzzer 30, which produces audible signals. The buzzer 30 may, however, be replaced with a lamp which intermittently produces visible signals. In this case, the output of the one-bit latch circuit 26 is supplied to the lamp through the amplifier 29 so that the lamp is turned on and off by means of the high- and low-level circuit outputs, respectively. Alternatively, the buzzer and the lamp may be used at the same time.

In the embodiment described above, the initial counter value C0 is calculated on the basis of the buzzer sounding period T stored in the lookup table TB and read out in accordance with the override value. This embodiment may be modified so that the initial counter value C0 is read out in accordance with the

- 9 -

override value by the use of the lookup table which indicates the correlation between the initial counter value C0 and the override value.

Alternatively, the buzzer sounding period T (msec) may be calculated according to the following equation (2), which corresponds to the example of setting of Fig. 3, for example, without using the lookup table, such as the table TB, or the initial counter value C0 may be calculated according to the following equation (3) so that the fraction of .5 and over is counted as a unit and the rest is cut away.

$$T = (110 - \text{override value}) \times 10 \qquad \text{--- (2)}$$

$$C0 = \{(110 - \text{override value}) \times 10 \div (8 \times 2)\} + 1 \qquad \text{--- (3)}$$

# C L A I M S

1.  An override information notifying apparatus mounted on a machine having an operating section which is operable at an operating speed determined in dependence on a set override value, comprising:

means for generating intermittent signals with a variable generation period; and

means for determining said generation period of said intermittent signals in accordance with said set override value.

2.  An override information notifying apparatus according to claim 1, wherein said intermittent signal generating means includes a buzzer for generating intermittent audible signals.

3.  An override information notifying apparatus according to claim 1, wherein said intermittent signal generating means includes a lamp for generating intermittent visible signals.

4.  An override information notifying apparatus according to claim 1, wherein said generation period determining means includes a memory for renewably storing said set override value, and determines said generation period in accordance with the set override value read from said memory.

5.  An override information notifying apparatus according to claim 4, wherein said generation period determining means includes a lookup table indicative of correlation between the override value and the intermittent signal generation period, and reads from said lookup table the generation period corresponding to the set override value read from said memory.

# FIG. I

EP 0 401 381 A1

# FIG.2

TB

| OVERRIDE (%) | BUZZER ON/OFF PERIOD T (SEC) |
|---|---|
| 100 | 0·1 |
| 90 | 0·2 |
| 80 | 0·3 |
| 70 | 0·4 |
| 60 | 0·5 |
| 50 | 0·6 |
| 40 | 0·7 |
| 30 | 0·8 |
| 20 | 0·9 |
| 10 | 1·0 |

# FIG.4

EP 0 401 381 A1

# FIG.3

START

RECEIVE DISPLAY DATA AND NEW OVERRIDE VALUE OVN — S1

DISPLAY PROCESS AND KEY OPERATION MONITORING PROCESS — S2

NEW OVERRIDE VALUE OVN = PRESENT OVERRIDE VALUE OVR ? — S3 · YES

NO

OVR ⟵ OVN — S4

CALCULATE ININITAL COUNTER VALUE CO CORRESPONDING TO NEW OVERRIDE VALUE OVN AND SET VALUE CO IN COUNTER — S5

C ⟵ C-1 — S6

C = 0 ? — NO · S7

YES

REVERSE LEVEL OF ONE-BIT LATCH INFORMATION IMAGE VALUE ON RAM — S8

TRANSFER ONE-BIT LATCH INFORMATION IMAGE VALUE TO LATCH CIRCUIT — S9

C ⟵ INITIAL VALUE — S10

END

# INTERNATIONAL SEARCH REPORT

International Application No PCT/JP89/01236

## I. CLASSIFICATION OF SUBJECT MATTER (if several classification symbols apply, indicate all) 6

According to International Patent Classification (IPC) or to both National Classification and IPC

Int. Cl⁵     B25J19/06, G05B19/405

## II. FIELDS SEARCHED

### Minimum Documentation Searched 7

| Classification System | Classification Symbols |
|---|---|
| IPC | B25J9/22, 19/06, G05B19/405 |

### Documentation Searched other than Minimum Documentation to the Extent that such Documents are Included in the Fields Searched 8

| | |
|---|---|
| Jitsuyo Shinan Koho | 1926 – 1989 |
| Kokai Jitsuyo Shinan Koho | 1971 – 1989 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| A | JP, A, 62-198909 (Atugi Motor Parts Co., Ltd.), 2 September 1987 (02. 09. 87), Page 1, lower left column, line 5 to lower right column, line 3 (Family: none) | 1 |
| A | JP, U, 59-1591 (Honda Motor Co., Ltd.), 7 January 1984 (07. 01. 84), Page 1, lower left column, line 2 to lower right column, line 4 (Family: none) | 1 |
| A | JP, A, 58-102688 (Kawasaki Heavy Industries, Ltd.), 18 June 1983 (18. 06. 83), & US, A, 4,442,387 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| February 26, 1990 (26. 02. 90) | March 12, 1990 (12. 03. 90) |

| International Searching Authority | Signature of Authorized Officer |
|---|---|
| Japanese Patent Office | |

Form PCT/ISA/210 (second sheet) (January 1985)